# EUROPEAN PATENT APPLICATION

(11) **EP 1 298 744 A1**
(43) Date of publication of application: **02.04.2003**
(21) Application number: 01945737.3
(22) Date of filing: 29.06.2001
(51) Int. Cl.: H01M 4/86, H01M 4/96

(54) **FUEL CELL**

(30) Priority: 03.07.2000 JP 2000200659
(71) Applicant: MATSUSHITA ELECTRIC INDUSTRIAL CO., LTD., Kadoma-shi, Osaka 571-8501 (JP)
(72) Inventor: UCHIDA, Makoto, Hirakata-shi, Osaka 573-1145 (JP); YASUMOTO, Eiichi, Kyoto 619-0238 (JP); YOSHIDA, Akihiko, Hirakata-shi, Osaka 573-0165 (JP); SUGAWARA, Yasushi, Osaka 577-0056 (JP); MORITA, Junji, Moriguchi-shi, Osaka 570-0031 (JP); SAKAI, Osamu, Neyagawa-shi, Osaka 572-0055 (JP)
(74) Representative: Leson, Thomas Johannes Alois, Dipl.-Ing.
(86) International application number: JP0105683
(87) International publication number: WO02003488

(57) **Abstract**

In order to provide a fuel cell with high discharge property by a production step that involves reduced variation in the coating amount with little occurrence of coating failure, a fuel cell is provided, which comprises: a hydrogen ion-conductive polymer electrolyte membrane; a pair of electrodes, each formed by laminating a catalyst layer in contact with the polymer electrolyte membrane and a gas diffusion layer in contact with the catalyst layer; and a pair of conductive separators, one of which having a gas flow path for supplying and discharging an oxidant gas to and from one of the electrodes and the other having a gas flow path for supplying and discharging a fuel gas to and from the other of the electrodes, wherein the gas diffusion layer in at least one of the electrodes contains a nonfibrous water-repellent polymer.

## Description

### Technical Field

The present invention relates to a fuel cell which uses a gaseous fuel such as hydrogen, methanol or a hydrogen obtained by reforming a fossil fuel, or a liquid fuel such as methanol, ethanol or dimethyl ether, along with an oxidant such as air or oxygen. More specifically, the present invention relates to a gas diffusion layer which forms a fuel cell electrode using a polymer electrolyte.

### Background Art

In general, an electrode for use in a polymer electrolyte fuel cell is constituted by disposing catalyst layers on both outer surfaces of a polymer electrolyte membrane, and further disposing gas diffusion layers on the outer surfaces of the catalyst layers. Mainly, the gas diffusion layer has the following three functions. The first function is to diffuse a reacting gas such as a fuel gas or an oxidant gas in order to uniformly supply the reacting gas from a gas flow path disposed on the outer surface of the gas diffusion layer to the catalyst layer. The second function is to rapidly discharge water produced at the catalyst layer to the gas flow path. The third function is to transfer electrons required for the reaction at the catalyst layer.

Accordingly, the gas diffusion layer is required to have high permeability to the reacting gas, high water vapor permeability and high electrical conductivity. For this reason, heretofore, the gas permeability has been provided by forming the gas diffusion layer so as to have a porous structure, the water vapor permeability has been provided by dispersing in the gas diffusion layer a water repellent polymeric material typified by fluorocarbon resin, and the electrical conductivity has been provided by forming the gas diffusion layer using an electronic conductive material such as a carbon fiber, metal fiber or carbon fine powder.

However, the effects provided by the various attempts to improve the gas permeability, water vapor permeability and electrical conductivity conflict with each other. For example, when the diameter or the filling amount of the carbon fiber is decreased to increase the porosity of the gas diffusion layer in an attempt to improve the gas permeability, the electrical conductivity is reduced. Also, when a water-repellent polymer is added in an attempt to improve the water vapor permeability, the gas permeability and electrical conductivity are reduced.

Therefore, efforts are being made to make the above conflicting effects compatible by forming the gas diffusion layer using a combination of, for example, a layer of carbon fiber and a layer formed of a carbon fine powder and a water-repellent polymer, instead of using a single member. However, few prior art techniques specifically define various characteristics particularly required for a water-repellent polymer for achieving the above object.

Typical uses of the above water-repellent polymer are disclosed in several prior art documents. For example, each of Japanese Unexamined Patent Publication Nos. Hei 6-203851, Hei 7-130373, Hei 8-106915 and Hei 9-259893 discloses a method of producing a gas diffusion layer by impregnating either a carbon paper or a carbon cloth with a dispersion of polytetrafluoroethylene (PTFE). Additionally, each of Japanese Unexamined Patent Publication Nos. Hei 7-220734, Hei 4-067571, Hei 3-208260, Hei 3-208261, Hei 3-208262 and Hei 6-44984 discloses a method of forming a layer of a carbon fine powder and PTFE added.

However, when forming a layer of a carbon fine powder and PTFE having a large molecular weight as the water-repellent polymer, the water-repellent polymer is prone to fibrillate, reducing the stability of the dispersion of the water-repellent polymer and the carbon fine powder (hereinafter, also referred to as "water-repellent layer ink"). Therefore, during production processes such as coating and printing, the water-repellent layer ink occasionally solidified to change the concentration thereof or to form a blockage in pipes, pumps or the like, thereby causing a variation in the coating amount or inducing a coating failure. Consequently, the discharge property of the obtained electrode was deteriorated.

It is an object of the present invention to solve the foregoing problem in the prior art, more specifically, to optimize the molecular weight, melt viscosity, molecular structure and the like of a water-repellent material in a gas diffusion layer, thereby providing a fuel cell electrode with high discharge property and a fuel cell using the same, such as a solid polymer fuel cell or a liquid fuel cell, by a production step that involves reduced variation in coating amount with little occurrence of coating failure.

### Disclosure of Invention

The present invention relates to a fuel cell comprising: a hydrogen ion-conductive polymer electrolyte membrane; a pair of electrodes, each formed by laminating a catalyst layer in contact with the hydrogen ion-conductive polymer electrolyte membrane and a gas diffusion layer in contact with the catalyst layer; and a pair of conductive separators, one of which having a gas flow path for supplying and discharging an oxidant gas to and from one of the electrodes and the other having a gas flow path for supplying and discharging a fuel gas to and from the other of the electrodes, wherein the gas diffusion layer in at least one of the electrodes contains a nonfibrous water-repellent polymer.

It is effective that the nonfibrous water-repellent polymer comprises a polymer compound having a molecular weight of not less than 100 and less than 1,000,000.

It is also effective that the nonfibrous water-repellent polymer has a melt viscosity of not less than 10 P and not more than 10⁹ P at 380°C.

It is also effective that the nonfibrous water-repellent polymer has a melting point of not less than 250°C and not more than 330°C.

### Brief Description of Drawings

FIG. 1 and FIG. 2 are schematic diagrams illustrating how a water-repellent polymer changes in response to shearing force in an example of the present invention and a comparative example, respectively.
FIG. 3 and FIG. 4 are schematic diagrams illustrating how a water-repellent polymer changes in response to heat treatment in an example of the present invention and a comparative example, respectively.
FIG. 5 is a graph showing the first voltage-current characteristics of the fuel cells of examples of the present invention and a comparative example.
FIG. 6 is a graph showing the second voltage-current characteristics of the fuel cells of examples of the present invention and a comparative example.
FIG. 7 is a graph showing the voltage-operating time characteristics of the fuel cells of examples of the present invention and a comparative example.

### Best Mode for Carrying Out the Invention

The present invention relates to a fuel cell comprising: a hydrogen ion-conductive polymer electrolyte membrane; a pair of electrodes, each formed by laminating a catalyst layer in contact with the hydrogen ion-conductive polymer electrolyte membrane and a gas diffusion layer in contact with the catalyst layer; and a pair of conductive separators, one of which having a gas flow path for supplying and discharging an oxidant gas to and from one of the electrodes and the other having a gas flow path for supplying and discharging a fuel gas to and from the other of the electrodes, wherein the gas diffusion layer in at least one of the electrodes contains a nonfibrous water-repellent polymer.

According to the present invention, the water-repellent polymeric material used does not have the form of fibril and, therefore, the water-repellent layer ink containing the water-repellent polymeric material and a carbon fine powder is highly stable. Thus, during the production processes such as coating and printing, the water-repellent layer ink does not solidify to form a blockage in pipes, pumps and the like or to change the concentration thereof, reducing the variation in the coating amount and the occurrence of coating failure. This results in an effect of improving the discharge property of the obtained electrode.

Also, in the present invention, the molecular weight of a nonfibrous water-repellent polymer used in the gas diffusion layer is set at not less than 100 and less than 1,000,000. As a conventional water-repellent polymer for use in a gas diffusion layer, for example, PTFE has been used, which has a molecular weight of from 2,000,000 to 6,000,000 and fibrillates to exhibit high moldability. On the other hand, the nonfibrous water-repellent polymer used in the present invention does not have a sufficient molecular weight and thus does not fibrillate, so that a fuel cell which uses an electrode employing the same has an excellent discharge property.

Moreover, since the melt viscosity of the nonfibrous water-repellent polymer used in the gas diffusion layer is set at not less than 10 P and not more than 10⁹ P at 380°C, the nonfibrous water-repellent polymer is molten to enter into pores of a carbon fine powder during the sintering step of the electrode, thereby closely bonding the two together to enable the obtained electrode to have higher water repellency and durability, as compared with the case where a conventional PTFE having a melt viscosity of not less than 10¹¹ P at 380°C is used.

Further, since the melting point of the nonfibrous water-repellent polymer used in the gas diffusion layer is set at not less than 250°C and not more than 330°C, the temperature used in the sintering step of the electrode can be made lower as compared with the case where a conventional PTFE having a melting point of not less than 333°C and not more than 347°C is used, so that it is possible to produce the electrode by a production step that involves less energy consumption to reduce costs.

As such a nonfibrous water-repellent polymer, a copolymer of tetrafluoroethylene and hexafluoropropylene is preferably used. Since the copolymer has a lower melt viscosity at 380°C (not less than 10⁴ P and not more than 10⁵ P) and a lower melting point (270°C) compared with a conventional molding PTFE, the melt viscosity is low in the sintering step of the electrode and the copolymer easily enters into pores of the carbon fine powder, thereby closely bonding the two together. This yields high water repellency and durability to decrease the temperature used in the sintering step of the electrode, so that it is possible to produce the electrode by a production process that involves less energy consumption to reduce costs.

Moreover, since the nonfibrous water-repellent polymer of the present invention does not fibrillate, the water-repellent layer ink is highly stable and an electrode can be obtained without causing a variation in the coating amount and a coating failure during the production step; therefore, the use of such an electrode can realize a low-cost fuel cell with high discharge property and durability.

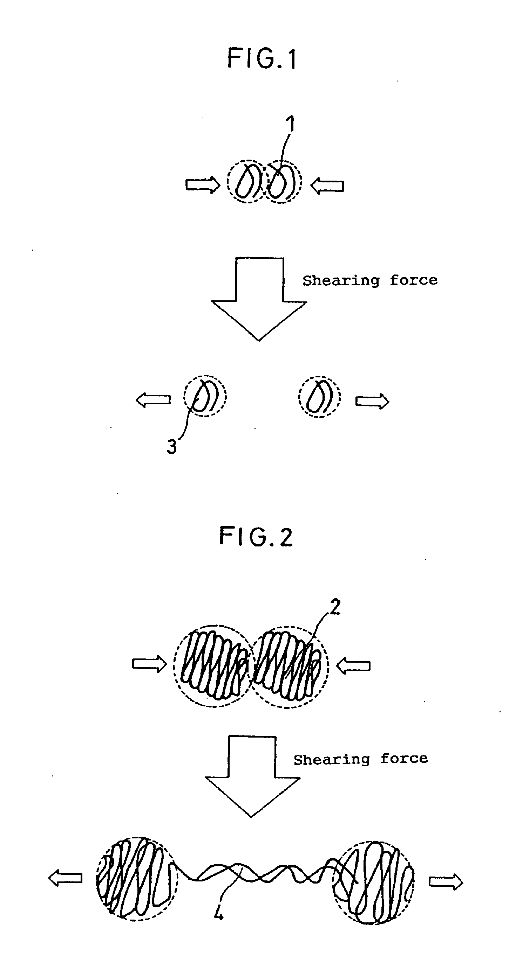

Herein, the embodiment of the present invention will be described by referring to drawings. FIG. 1 is a diagram conceptually showing the primary particle of a nonfibrous water-repellent polymer used in the present invention. FIG. 2 is a diagram conceptually showing the primary particle of a conventional water-repellent polymer.

The nonfibrous water-repellent polymer of the present invention has a molecular weight of less than 1,000,000 which is smaller than the molecular weight of a conventionally used molding PTFE (from 2,000,000 to 6,000,000). As shown in FIG.2, each primary particle 2 of the conventional water-repellent polymer is consitituted by an extremely long, folded molecular chain. When shearing force is applied to the primary particles 2, the molecular chains thereof become tangled with each other to produce a fibril 4.

On the other hand, the molecular chain constituting each primary particle 1 of the nonfibrous water-repellent polymer used in the present invention has a small molecular weight and thus is short. Therefore, as shown in FIG. 1, even when shearing force is applied to the primary particles 1, the molecular chains thereof do not become tangled with each other, so that the fibril 4 as shown in FIG. 2 is not produced.

Accordingly, the obtained water-repellent layer ink, which contains the water-repellent polymeric material and a carbon fine powder, is highly stable. For this reason, during the production processes such as coating and printing, the water-repellent layer ink does not solidify to form a blockage in pipes, pumps and the like or to change the concentration thereof, reducing the variation in the coating amount and the occurrence of coating failure. This provides the effect of improving the discharge property of the obtained electrode.

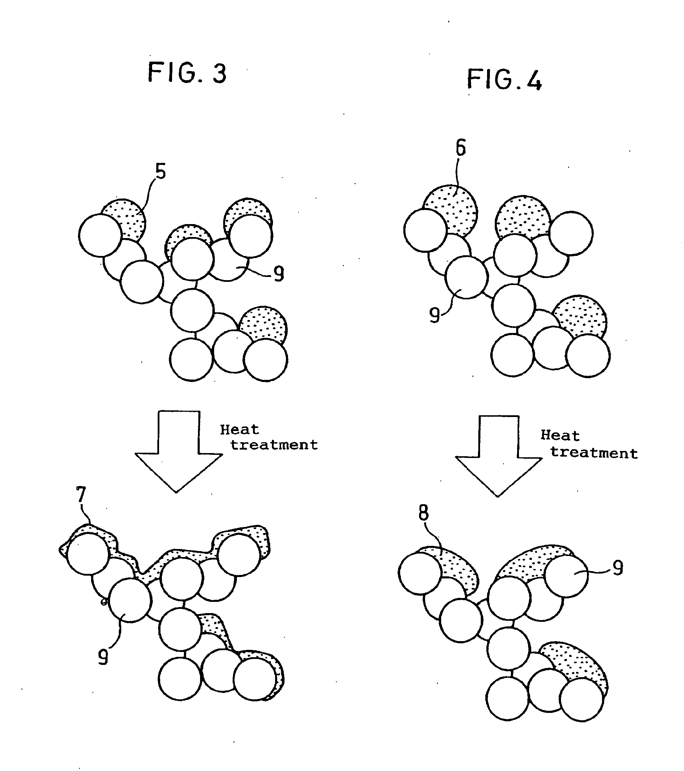

Next, FIG. 3 conceptually shows the state of a nonfibrous water-repellent polymer of the present invention and a carbon fine powder before and after heat treatment either in a water-repellent layer ink or in a gas diffusion layer. FIG. 4 conceptually shows the state of a conventional water-repellent polymer (molding PTFE) and a carbon fine powder before and after heat treatment either in a water-repellent layer ink or in a gas diffusion layer. As discussed above, the melt viscosity of the nonfibrous water-repellent polymer of the present invention is not less than 10 P and not more than 10⁹P at 380°C, whereas the melt viscosity of the conventionally used molding PTFE is not less than 10¹¹ P at 380°C. For this reason, as shown in FIG. 4, when the particle 6 of the conventional water-repellent polymer is heated, the heated particle 8 has a relatively high melt viscosity; therefore, the particle 8 does not sufficiently diffuse on the surface of a carbon fine powder 9, although it is adsorbed to the carbon fine powder 9. In contrast, as shown in FIG. 3, when the particle 5 of the nonfibrous water-repellent polymer of the present invention is heated, the melt viscosity thereof becomes low, so that the heated particle 7 is molten on the surface of the carbon fine powder 9 to cover the carbon fine powder 9, while entering into pores of the powder. Consequently, the nonfibrous water-repellent polymer and the carbon fine powder can be closely bonded together, resulting in high water repellency and durability.

As described above, by using the gas diffusion layer produced in accordance with the present invention, it is possible to produce a fuel cell electrode with high activity and a fuel cell using the same. In the following, the present invention will be described in further detail by way of examples; however, the present invention is not limited thereto.

### Examples 1 and 2 and Comparative Example 1

To acetylene black (Denka Black manufactured by DENKI KAGAKU KOGYO KABUSHIKI KAISHA), a dispersion (Lublon LDW-40 manufactured by DAIKIN INDUSTRIES, LTD.) of PTFE as a nonfibrous water-repellent polymer was mixed to prepare a water-repellent layer ink containing 10 to 70 wt% of PTFE (dry weight). This water-repellent layer ink was applied onto the surface of a carbon paper (TGPH060H manufactured by Toray Industries, Inc.), which was heated by a hot air dryer at 350°C and dried to form a gas diffusion layer.

Next, on conductive carbon particles with a mean primary particle size of 30 nm (ketjen black EC manufactured by AKZO Chemie, the Netherlands) as a carbon fine powder, platinum particles with a mean particle size of approximately 30 Å was carried at 50 wt% to obtain catalyst carrying particles for an air electrode. Similarly, on the same ketjen black EC as above, alloy particles comprising platinum and ruthenium (atomic ratio 1:1 to 1.5) with a mean size of approximately 30 Å was carried at 25 wt% to obtain catalyst carrying particles for a fuel electrode.

Then, either the catalyst carrying particles for the air electrode or that for the fuel electrode were mixed with a dispersion of perfluorosulfonic acid (Flemion manufactured by Asahi Glass Co., Ltd.) as a hydrogen ion-conductive polymer electrolyte, thereby preparing two types of catalyst pastes, one for the air electrode and the other for the fuel electrode. At this time, the mixing ratio by weight of each of the catalyst carrying particles to the hydrogen ion-conductive polymer electrolyte was set at 96:4.

Next, the catalyst paste for the air electrode was printed on one surface of a gas diffusion layer obtained in the above-described manner to give a gas diffusion layer for the air electrode, and the catalyst paste for the fuel electrode was printed on one surface of another gas diffusion layer obtained in the above-described manner to give a gas diffusion layer for the fuel electrode. Similarly, the catalyst paste for the air electrode was printed on one surface of a hydrogen ion-conductive polymer electrolyte membrane (Nafion 112 manufactured by Du Pont, the U.S.), and the catalyst paste for the fuel electrode was printed on the other surface thereof.

Subsequently, the gas diffusion layer for the fuel electrode and the gas diffusion layer for the air electrode were arranged on both sides of the hydrogen ion-conductive polymer electrolyte membrane such that the surfaces made of the same catalyst pastes were faced each other, and the whole was bonded by hot pressing to fabricate an electrolyte membrane and electrode assembly (MEA) 1 (Example 1). Additionally, in order to prevent a gas leak from the MEA, the area of the hydrogen ion-conductive polymer electrolyte membrane was made larger than that of the gas diffusion layer.

Meanwhile, an MEA 2 (Example 2) was fabricated in the same manner as that used for the MEA 1, except for using a dispersion (ND-1) of FEP as a nonfibrous water-repellent polymer manufactured by DAIKIN INDUSTRIES, LTD., in place of Lubron LDW-40 manufactured by DAIKIN INDUSTRIES, LTD.

Also, a comparative MEA 1 (Comparative Example 1) was fabricated in the same manner as that used for the MEA 1, except for using a dispersion (D-1) of PTFE as a fibrous water-repellent polymer manufactured by DAIKIN INDUSTRIES, LTD. in place of Lubron LDW-40 manufactured by DAIKIN INDUSTRIES, LTD.

Herein, various characteristics of the respective water-repellent polymers used in Examples 1 and 2 and Comparative Example 1 were shown in TABLE 1. The nonfibrous water-repellent polymers used in the Examples had a molecular weight of less than 1,000,000, melt viscosity of from 10 to 10⁹ P at 380°C and melting point of from 250°C to 330°C; therefore, they did hot fibrillate when subjected to a thermal processing as described above.

**TABLE 1**

| | Various characteristics of water-repellent polymer | | |
|---|---|---|---|
| | Molecular weight | Melt viscosity (P) | Melting point (°C) |
| Ex. 1 | Not more than 600,000 | 10²-10⁸ | 270-327 |
| Ex. 2 | 200,000-500,000 | 10⁴-10⁵ | 270 |
| Com. Ex 1 | 2,000,000-6,000,000 | Not less than 10¹¹ | 333-347 |

Next, a gasket plate made of rubber was bonded onto the periphery of the hydrogen ion-conductive polymer electrolyte membrane of each of the MEAs 1 and 2 and the comparative MEA 1 fabricated as above, and a manifold aperture for flowing a cooling water, fuel gas and oxidant gas was formed in the gasket.

Then, a gas flow path with a depth of 0.5 mm was formed on one surface of a resin-impregnated graphite plate having a size of 20 cm × 32 cm × 1.3 mm to give a separator for supplying a gas. Two sheets of the separator and the MEA were laminated such that the gas flow paths formed on the respective sheets of the separator faced the MEA, thereby obtaining a unit cell.

Meanwhile, a cooling water flow path with a depth of 0.5 mm was formed on one surface of a graphite plate having a size of 20 cm × 32 cm × 1.3 mm to give a separator for cooling.

After two pieces of the above unit cell were laminated to obtain a 2-cell stack, this 2-cell stack was sandwiched by the separators for cooling, and 50 sets of the 2-cell stack were laminated to give a cell stack comprising 100 unit cells. At this time, a current collector plate made of stainless steel and an insulating plate made of an electrically insulating material were disposed on both ends of the cell stack, and the whole was fixed by end plates and clamping rods. The clamping pressure of the clamping rods was set at 15 kgf/cm² per the area of the separator.

### In the same manner as described above, the MEA 1 was used to obtain a cell stack 1, and the MEA 2 was used to obtain a cell stack 2. Similarly, the comparative MEA 1 was used to obtain a comparative cell stack 1. Each of these cell stacks was evaluated as follows.

### (1) Discharge characteristics

Pure hydrogen gas was supplied to the fuel electrode and air was supplied to the air electrode of each cell stack fabricated as above, and discharge test was conducted on each cell in the condition in which the cell temperature was 75°C, fuel gas utilization rate (U_{f}) was 70% and air utilization rate (Uₒ) was 40%. It should be noted that the fuel gas was passed through warm water at 60°C to 70°C to be humidified, and the air was passed through warm water at 45°C to 70°C to be humidified.

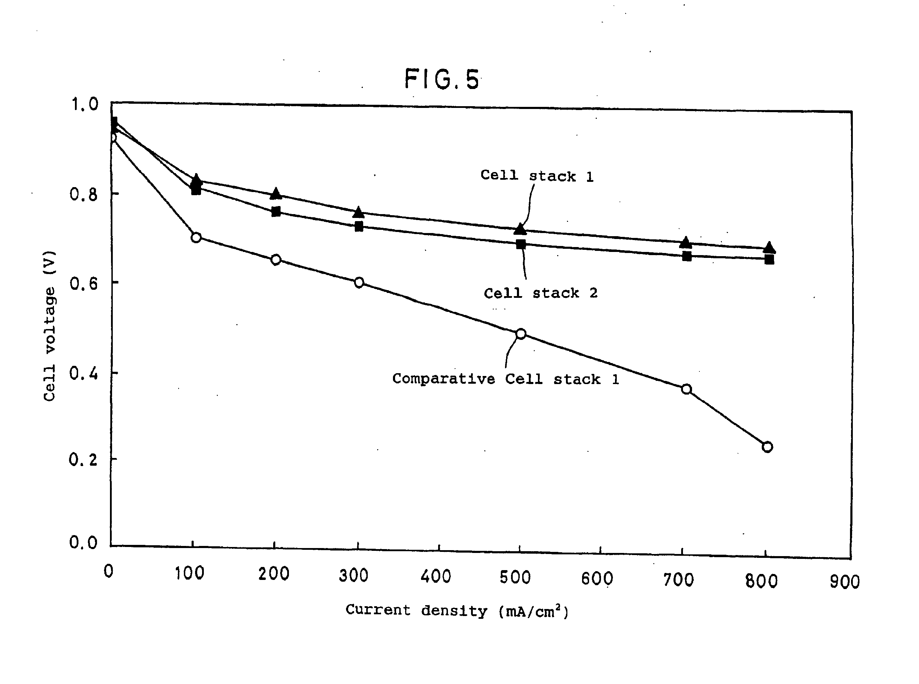

FIG. 5 shows the discharge characteristics (the relation between current density and voltage per unit cell) of the cell stacks 1 and 2 and the comparative cell stack 1. At a current density of 300 mA/cm², the voltages per unit cell of the cell stacks 1 and 2 and the comparative cell stack 1 were 768 mV, 738 mV and 610 mV, respectively, revealing that the cell stacks 1 and 2 of the present invention had higher power generation efficiency than the comparative cell stack 1.

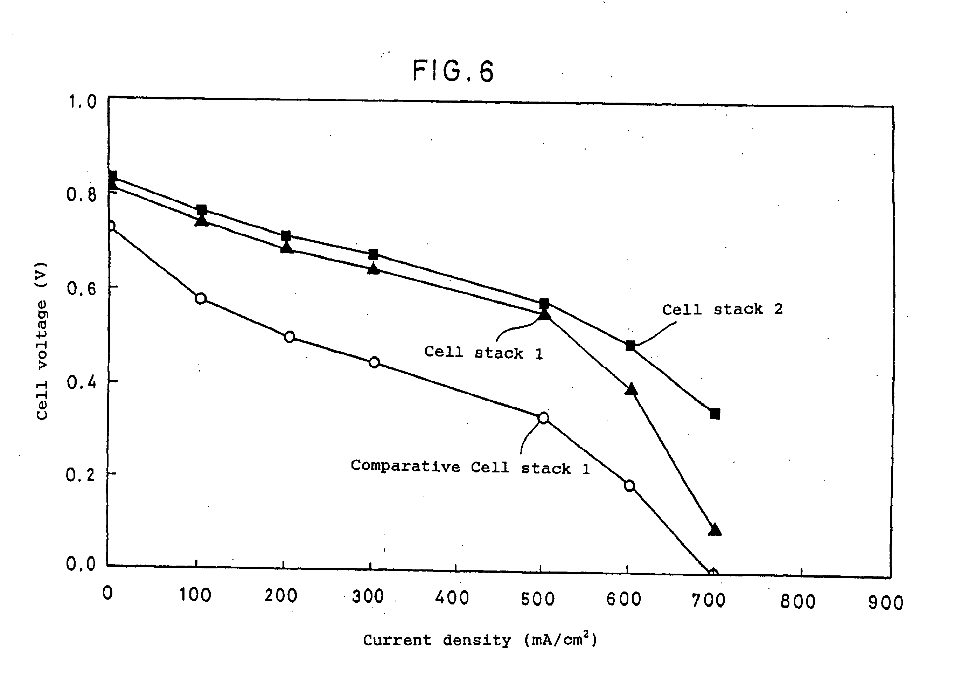

An aqueous methanol solution of 2 mol/l at a temperature 60°C was supplied to the cell stacks 1 and 2 and the comparative cell stack 1, and discharge test was conducted on each cell stack in the condition in which the cell temperature was 75°C and the air utilization rate (Uₒ) was 40%. It should be noted that the air was passed through warm water at 45°C to 70°C to be humidified. The result of the discharge test was shown in FIG. 6. As shown in FIG. 6, at a current density of 200 mA/cm², the voltages per unit cell of the cell stacks 2 and 1 and the comparative cell stack 1 were 714 mV, 688 mV and 417 mV, respectively.

### (2) Variation in the coating amount of the water-repellent layer ink

Herein, shown in TABLE 2 were the variation in the coating amount of the water-repellent layer ink in the gas diffusion layer for the cases where the MEAs 1 and 2 and the comparative MEA were fabricated. Whereas the variation in the coating amount of the comparative cell stack 1 was from ±20 to ±30, the variation in the coating amount of each of the cell stacks 1 and 2 of the present invention was from ±3 to ±6. When the water-repellent layer ink of Comparative Example 1 was used, a solid content was deposited in bending portions of pipes, pumps, filters and the like to form a blockage during the coating step. Moreover, since the viscosity and the ratio of the solid content in the water-repellent layer ink fluctuated during the coating step, it was difficult to conduct the coating stably. An observation by SEM revealed that the deposited solid content had turned rubbery and contained fibrous material therein. This was presumably because shearing force was exerted to the water-repellent polymer in the pumps, pipes and filters during the coating of the water-repellent layer ink of the Comparative Example, causing the water-repellent polymer to fibrillate to be deposited in the state of the rubbery solid content. Because of the blockage formed by such deposit, the component ratio of a portion of the water-repellent layer ink applied on the gas diffusion layer was altered to change the viscosity and the ratio of solid content of the water-repellent layer. Additionally, pulsations were produced in the flow of the water-repellent layer ink to destabilize the coating amount of the water-repellent layer ink, which became the cause of the variation in the coating amount in the plane of the gas diffusion layer.

**TABLE 2**

| | Fuel used | Variation in coating amount (%) | Variation in initial discharge characteristics (mV) | Life Decrease (mV/1000h) |
|---|---|---|---|---|
| Cell stack 1 | Hydrogen | ±3 | ±5 | 5 |
| | Methanol | ±5 | ±8 | 6 |
| Cell stack 2 | Hydrogen | ±4 | ±7 | 3 |
| | Methanol | ±6 | ±8 | 7 |
| Com. cell stack 1 | Hydrogen | ±20 | ±70 | 50 |
| | Methanol | ±20 | ±80 | 60 |

On the other hand, during the coating step of each of the Examples, no blockage was observed in pipes, pumps, filters and the like, and the coating amount of the ink was highly stable. No fibrillation was observed for each of the water-repellent polymers used in Examples 1 and 2. As a result, they were greatly superior to the Comparative Example in terms of the variation in the coating amount.

Also, shown in TABLE 2 were the variations in the initial discharge characteristics of the cell stacks 1 and 2 of the present invention and the comparative cell stack 1 as the voltage per unit cell. Whereas the variation of the comparative cell stack 1 was ±70 to ±80, the variations of the cell stacks 1 and 2 were ±5 to ±8. Such variation resulted from the variation in the coating amount of the water-repellent layer in the gas diffusion layer. The variation of the water-repellent layer in the gas diffusion layer was reflected in the differences in the supplying amount of the reacting gas and the level of ability to discharge produced water and produced carbonic acid gas, resulting in the variation in discharge performance among the fuel cells.

Generally, a plurality of unit cells as those described above are connected either in series or in parallel to be used as a fuel cell. Accordingly, a variation in performance among the unit cells significantly affects the performance of the cell stack as a whole. Particularly, in the case where a plurality of the unit cells are connected in series, the critical current value of the unit cell with the lowest performance becomes the critical current value of the cell stack as a whole. Therefore, it is important to reduce the variation in performance among the unit cells.

In contrast, the water-repellent layer ink of the present invention, which contained the nonfibrous water-repellent polymer and a carbon fine powder, was highly stable. Therefore, during the production process such as coating and printing, the water-repellent layer ink did not solidify to form a blockage in pipes, pumps and the like or to change the concentration thereof, reducing the variation in the coating amount and the occurrence of coating failure. Consequently, the variation in discharge property among the unit cells was reduced, resulting in an improved discharge property of the fuel cell stack.

Additionally, as shown in TABLE 1, the nonfibrous water-repellent polymers used in the cell stacks 1 and 2 of the present invention had a lower melt viscosity than the fibrous water-repellent polymer used in the comparative cell stack. For this reason, an observation by a scanning electron microscope (SEM) during the heat-treatment in the production process of the electrode revealed that, as shown in FIG. 4, the particle 6 of the conventional water-repellent polymer had a high melt viscosity even after heat-treated, so that the heated particle 8 of the water-repellent polymer did not sufficiently diffuse on the surface of the carbon fine powder 9.

On the other hand, a similar observation by SEM revealed that, as shown in FIG. 3, the particle 5 of the nonfibrous water-repellent polymer used in the present invention had a low melt viscosity, so that the heated particle 7 of the nonfibrous water-repellent polymer was molten on the surface of the carbon fine powder 9 to enter into pores of the carbon fine powder, thereby closely bonding the two together.

Also, the difference in the discharge property among the cell stacks 1 and 2 of the present invention and the comparative cell stack 1 shown in FIGS. 5 and 6 corresponded to the difference in the water-repellent effect of the water-repellent layer; therefore, it was found that the cell stacks of the present invention exhibited higher water repellency than the comparative cell stack, and this was reflected in the supplying amount of reacting gas and the level of ability to discharge produced water and produced carbonic acid gas to improve the discharge property of the fuel cells.

### (3) Life characteristic

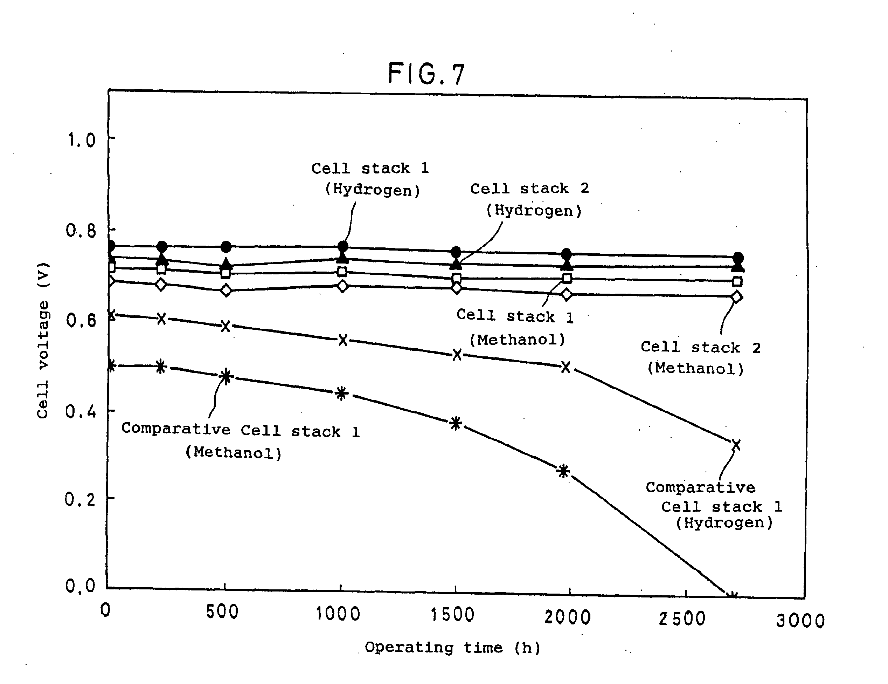

The life characteristics of the cell stacks 1 and 2 of the present invention and the comparative cell stack 1 were shown in FIG. 7 and TABLE 2. Whereas the performance of the comparative cell stack 1 decreased by as much as 50 to 60 mV per 1000 hours, the performance of the cell stacks 1 and 2 decreased by as little as 3 to 7 mV. This was because, as previously described, in the case of the gas diffusion layers of the cell stacks of the present invention, the nonfibrous water-repellent polymer was molten on the surface of the carbon fine powder to enter into pores of the carbon fine powder, thereby closely bonding the two together to achieve high water repellency and durability for a long period.

Although this example used either hydrogen or methanol as the fuel, the same result was obtained by using a hydrogen obtained by reforming a fuel or a fuel containing an impurity such as carbonic acid gas, nitrogen or carbon monoxide. The same result was also obtained by using a liquid fuel such as ethanol or dimethyl ether and a mixture thereof, in place of methanol. The same result was also obtained by using a vaporized liquid fuel.

Further, the carbon fine powder and the carbon paper used in the examples of the present invention were not particularly limited, and the same result was obtained by using other carbon black and carbon cloth. The structures of the catalyst layer and the polymer electrolyte membrane were not limited to those in the above examples, and the same result was obtained by using various catalyst layers and polymer electrolyte membranes.

### Industrial Applicability

As is evident from the above-described examples, by optimizing the molecular weight, melt viscosity, molecular structure and the like of a water-repellent material in a gas diffusion layer, it is possible to produce a fuel cell electrode with high discharge property and fuel cells using the same, such as a solid polymer fuel cell and liquid fuel cell, by a production process that involves reduced variation in the coating amount with little occurrence of coating failure.

## Claims

1. A fuel cell comprising: a hydrogen ion-conductive polymer electrolyte membrane; a pair of electrodes, each formed by laminating a catalyst layer in contact with said hydrogen ion-conductive polymer electrolyte membrane and a gas diffusion layer in contact with said catalyst layer; and a pair of conductive separators, one of which having a gas flow path for supplying and discharging an oxidant gas to and from one of said electrodes and the other having a gas flow path for supplying and discharging a fuel gas to and from the other of said electrodes,
wherein said gas diffusion layer in at least one of said electrodes contains a nonfibrous water-repellent polymer.

2. The fuel cell in accordance with claim 1, wherein said nonfibrous water-repellent polymer comprises a polymer compound having a molecular weight of not less than 100 and less than 1,000,000.

3. The fuel cell in accordance with claim 1. wherein said nonfibrous water-repellent polymer has a melt viscosity of not less than 10 P and less than 10⁹ P at 380°C.

4. The fuel cell in accordance with claim 1, wherein said nonfibrous water-repellent polymer has a melting point of not less than 250°C and not more than 330°C.
